# EUROPEAN PATENT SPECIFICATION

(11) **EP 2 610 222 B1**
(45) Date of publication and mention of the grant of the patent: **24.02.2021**
(21) Application number: 11196051.4
(22) Date of filing: 29.12.2011
(51) Int. Cl.: C02F 9/00, C05F 7/00, C05F 17/50, C02F 1/44, C02F 3/28, C02F 11/04

(54) **Method and plant for combined treatment of liquid organic waste**
Verfahren und Anlage zur kombinierten Behandlung von flüssigem organischem Abfall
Procédé et installation pour le traitement de déchet organique liquide

(43) Date of publication of application: 03.07.2013
(73) Proprietor: Holzer, André, Saint Petersburg 195027 (RU); Millett, Thomas, 1469 Luxembourg (LU); Kohleick, Reinhard, 42109 Wuppertal (DE)
(72) Inventor: Holzer, André, 195027 Saint Petersburg (RU); Lasserre, Jean-Christophe, 34150 Aniane (FR)
(74) Representative: Mellet, Valérie Martine

(56) References cited:
- EP-A1- 2 390 235
- DE-A1-102007 004 135
- KR-B1- 101 027 449
- KIM SANG-HYOUN ET AL: "Enhanced Lipid Degradation in an Upflow Anaerobic Sludge Blanket Reactor by Integration with an Acidogenic Reactor", WATER ENVIRONMENT RESEARCH, WATER ENVIRONMENT FEDERATION, ALEXANDRIA, VA, US, vol. 82, no. 3, 1 March 2010 (2010-03-01), pages 267-272, XP001571079, ISSN: 1061-4303, DOI: 10.2175/106143009X442899

## Description

The present invention relates to a method and a plant for the treatment of organic waste with a fermentation gas fermenter (or biogas reactor). The biomethanisation is an effective and ecologic method for the treatment of organic wastes while producing energy in the form of methane via methanogenic bacteria.

The methanation allows treating refuse and waste as diverse as waste material, sewage sludge, animal waste, food-processing industries waste, household waste, agricultural waste, etc.

Liquid wastes can be treated by the methanation even when they show suspended material or dry matter, as animal waste (e.g. liquid manure) or sewage sludge. Various wastes are used to be mixed during methanation. For example agricultural wastes can be mixed with animal wastes which contain fat showing a high methanogene potential. Since the wastes are liquid or treated to be liquid, a good homogeneity can be achieved by agitating. The mixing operation typically occurs in a pre-treatment tank. The mixed liquid waste is then pumped to be directed to a biogas reactor where it is subjected to anaerobic fermentation.

When the fermentation is completed the digestate is extracted from the biogas reactor to be treated and stabilized. The residue stemming from the methanation of fermentable waste is comparable to compost and can be used for food or non food cultures (e.g. municipal green spaces). Also the digestate can be used for manuring operation. Regrettably surfaces and the periods of manurings are limited and a solution must be found to treat the continuous flow of digestate stemming from the process of biomethanation. This is why it is looked for treatment of the digestate in an environmentally and economically acceptable way. One of the problems faced by the skilled man in such treatement is to remove the suspended material or dry matter from the liquid digestate.

From prior art disclosed in DE102004030482, the treatment process involves at least two stages of sedimentation (or decantation) of the digestate in order to remove the maximum of suspended material or dry matter before it is subjected to ultrafiltration and reverse osmosis. In this process, a first sedimentation stage, which can optionally takes place in the biogas reactor, results in the removal of the first sediment phase to be used as compost. Optionally the first sediment phase is further subjected to another sedimentation stage in order to reduce again its volume before being used as compost. The first liquid phase is submitted to a second sedimentation stage carried out with preference with flocculent. The second liquid phase obtained is then submitted to ultrafiltration whereas the second sedimented phase is returned to the biogas reactor. A disadvantage of this process is that the sedimentations stages take a lot of time and do not allow a continuous treatment of the digestate. More, as suspension material are difficult to separate from the liquid and in order to protect as much as possible the ultrafilter membrane which is expensive, the treatment of the digestate involves preferably the use of flocculent which increases the costs.

Another problem faced by the skilled man is the low efficiency of the process that involves large biogas reactor and long residence time. To overcome such problem the classic biogas reactor can be replaced by an upflow anaerobic sludge blanket (UASB) reactor in which the residence time is reduced. The UASB reactor uses an anaerobic process via methanogenic bacteria. The liquid wastes pass upwards the tank through an anaerobic sludge bed where the microorganisms in the sludge come into contact with liquid waste material. The sludge bed is composed of microorganisms that naturally form granules of 0.5 to 2 mm diameter that have a high sedimentation velocity and thus resist wash-out from the system even at high hydraulic loads. The resulting anaerobic degradation process typically is responsible for the production of biogas (i.e. gas containing CH₄ and CO₂). The upward motion of released gas bubbles causes hydraulic turbulence that provides reactor mixing without any mechanical parts. However liquid wastes show usually a dry matter content too high to be directly treated in a UASB reactor. This is why a pre-treatment system such as liquid/solid separation before the liquid wastes enter the UASB reactor is needed as described in the document US2009/0255869. The process disclosed involves the precipitation of the dry matter contained in the digestate exiting the UASB reactor. This can be done by the use of flocculent which increases the costs associated to the treatment.

European patent application EP 2 390 235 A1 relates to a method and a plant for the treatment or an organic waste material in a liquid form comprising subjecting the liquid to anaerobic fermentation in a biogas reactor. The resulting digestate is then subjected to centrifugation and then to ultrafiltration and reverse osmosis.

A peer-reviewed article (S.-H. Kim, H.-S. Shin, Water Environ. Res., 2010, 82 (3), 267-272) discloses a two-phase system, composed of an acidogenic continuously stirred tank reactor and a methanogenic upflow anaerobic sludge blanket reactor to inhibit and degrade lipids in dairy wastewater.

The problem to be solved by the invention is to find an economical process allowing a continuous and efficient treatment of organic waste material in a liquid form that overcomes the drawback of the prior art. In particular, the invention provides a process and a plant improving efficiency of known treatments and reducing the costs associated to these treatments. The aim of the invention is to find an economical process and plant allowing the best destruction possible of the organic material while reducing the global processing time of the treatment.

The invention relates to a method of treatment of an organic waste material in a liquid form comprising:
- subjecting the liquid waste material to a first solid/liquid separation step resulting in a clarified fraction and a concentrated fraction
- subjecting said concentrated fraction to anaerobic fermentation in a classic biogas reactor resulting in a first digestate;
- subjecting said first digestate and said clarified fraction to a further anaerobic fermentation in a UASB reactor resulting in a second digestate; and
- subjecting said second digestate to ultrafiltration and reverse osmosis.

In a preferred embodiment of the invention, the first solid/liquid separation step is configured so the clarified fraction contains a content of dry matter lower than 3%, and with preference, lower than 2 %.

With preference, the first solid/liquid separation step is configured so the clarified fraction represents more than 70% in volume of the total organic waste liquid material to be treated, with preference more than 90 %.

Advantageously, the first solid/liquid separation step is configured so the concentrated fraction contains a content of dry matter in a range of 10 to 40 %, with preference 20 to 30 %.

Optionally, the concentrated fraction is diluted with addition of liquid waste material to contain a content of dry matter lower than 12 % before being subjected to anaerobic fermentation in the classic biogas reactor.

In another preferred embodiment, hydrolysis, acidogenosis and acetogenosis are performed on the concentrated fraction through an acidification step before being subjected to anaerobic fermentation in a classic biogas reactor.

In a preferred embodiment, the average residence time in the classic biogas reactor is about 15 to 25 days, with preference about 20 days.

Preferentially, the first digestate is subjected to a second liquid/solid separation before entering the anaerobic fermentation step in the UASB reactor, with preference said second liquid/solid separation removes solid particles above 3 mm.

With preference, the average residence time in the UASB reactor is about 0,5 to 2 days, with preference about 0,8 day.

Preferably, the second digestate is subjected to an ultrafiltration step resulting in a retentat and an ultrafiltrate and in that the retentat of ultrafiltration is returned to the UASB reactor, with preference the ultrafiltration step includes backwashing by reversing the direction of the ultrafiltrate flow, and in that the products generated by the backwashing are returned to the UASB reactor.

The invention also relates to a plant for treatment of an organic waste material in a liquid form, comprising a biogas reactor, an ultrafiltration unit and a reverse osmosis unit characterized in that the plant further comprises a UASB reactor, a liquid/solid separator to treat the organic waste material before the biogas reactor and means to direct the clarified fraction to the UASB reactor and the concentrated fraction to the biogas reactor.

With preference the plant further comprises means to direct the first digestate from the biogas reactor to the UASB reactor.

Preferably, the plant further comprises means for achieving a solid/liquid separation of the first digestate before the UASB reactor, with preference such means allow particles over 3 mm being removed.

Optionally, the plant further comprises means to redirect the retentat from the ultrafiltration unit and/or the product of the backwashing of the ultrafiltration unit to the UASB reactor.

In a preferred embodiment the plant further comprises an acidification tank to perform hydrolysis of the concentrated fraction before it is directed to the biogas reactor.

It is understood from this definition that the invention resides in the combined use of a classic biogas reactor and an UASB biogas reactor to perform the fermentation of the organic waste material in liquid form. The invention resides in firstly dispatching the liquid to be treated in two fractions showing different dry matter content, and secondly to adapt the anaerobic fermentation performed to such dry material content. According to the invention, the fraction showing the lowest dry material content will be submitted to a one stage anaerobic fermentation in a "high rate" UASB reactor, whereas the fraction showing the higher dry material content will be submitted to a two stages anaerobic fermentation involving reactor of different type, i.e. a classic biogas reactor and a UASB reactor. The invention further consists in giving the opportunity to completely destroy the organic material by subjecting it into one, two or more cycles of fermentation. The invention further provides a treatment for the first and second digestate that allows it to be subjected to ultrafiltration an reverse osmosis.

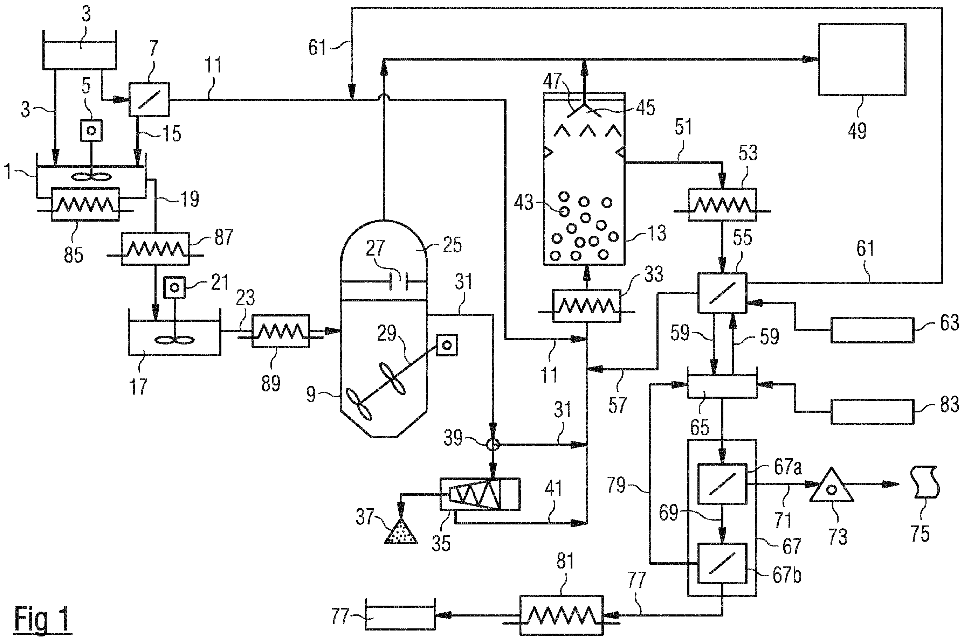

The method and the plant according to the invention are now described with reference to figure 1 of the drawing which shows a treatment plant according to the invention. The invention is defined by the appended claims.

The treatment plant comprises a collection tank (1) for collecting the liquid waste material (3), the collection tank (1) is provided with agitating means (5). With preference, the collection tank (1) is also provided with a heat exchanger (85) to pre-heat the liquid waste material to a temperature of about 20°C.

### The first liquid/solid separation step or concentration step

With preference, the liquid waste is first submitted to a concentration step in a liquid/solid separator (7). The liquid/solid separator can be with preference an inclined screen or a centrifuge (7). The purpose of this concentration step is the concentration of the liquid waste material, i.e. to reduce the liquid volume to be treated in the biogas reactor (9). The clarified liquid (11) shows a dry matter content of about 0,5 to 3 %. This result can be obtained by the adjustments of the parameters of centrifugation or by the adjustment of the sizes of the mashes of the screen. The adjustment parameters depend on the quality of the liquid waste material and vary accordingly. The liquid/solid separation can also be conducted by filtration, by a screw press or by any known device that allows liquid/solid separation, with preference in a continuous mode. The clarified liquid waste material (11) fraction is led to the UASB reactor (13), whereas the concentrated liquid waste material (15) fraction is led to the collection tank (1). The clarified liquid waste material (11) fraction represents 95 to 97 % of the initial liquid waste material (3) volume to be treated.

The concentrated liquid waste material (15) fraction can show a content of dry matter of 10 to 40 % or more. With preference the dry matter content of the concentrated liquid waste material (15) is about 20 to 30 %. Where the concentrated liquid waste material (15) shows a dry matter content of more than 12 %, the dry matter content is lowered to a concentration of less than 12 % with addition of liquid waste material directly in the collection tank (1). This dry matter rate of 12 % allows the liquid waste material to be pumped. It is to be noted that this liquid waste material fraction (comprising the concentrated liquid waste material and fresh liquid waste material to adjust the dry matter content to 12 %) flowing through the collecting tank (1) and intended to be led in the classic biogas reactor (9) represents advantageously 3 to 5 % of the initial liquid waste material volume to be treated. This reduction of the volume of the liquid waste material to be treated in the classic biogas reactor is one of the advantages of the invention. One consequence is the limitation of the size of the classic biogas reactor which reduces the costs associated to the process and to the plant. The concentration step allows a reduction of the residence time in the classic biogas reactor (9), and therefore helps increasing the biogas production rate.

In the collection tank (1) the concentrated liquid waste material (15) is pumped to be led to the biogas reactor (9) or to an acidification tank (17) when the dry matter is at a concentration less than 12 %. We remind here that the dry matter refers to suspended material and non-suspended material that can be found in the liquid waste material (3) to be fermented.

### The acidification step

The liquid waste material (19) with adjusted dry matter rate of less than 12 % can be directly led to the biogas reactor (9) or can be first submitted to an acidification step in an acidification tank (17) provided with agitating means (21). During the acidification step (17), hydrolysis, acidogenosis and acetogenosis are performed on the concentrated fraction (19). The temperature of the waste material (19) entering the acidification tank (17) is controlled to maintained to 20 to 25 °C, with preference to 22°C via a heat exchanger (87). The temperature inside the acidification tank is therefore maintained to a temperature range of between 20 to 30°C, with preference 22°C, which allows hydrolysis, acidogenosis and acetogenosis to be performed with good efficiency. Through hydrolysis the complex organic molecules are broken down into simple sugars, amino acids, and fatty acids. Acetate and hydrogen produced in the first stages can be used directly by methanogens. Other molecules, such as volatile fatty acids with a chain length greater than that of acetate must first be catabolised into compounds that can be directly used by methanogens. The biological process of acidogenosis results in further breakdown of the remaining components by acidogenic (fermentative) bacteria. Here, volatile fatty acids are created, along with ammonia, carbon dioxide, and hydrogen sulfide, as well as other byproducts. During acetogenesis, simple molecules created through the acidogenesis phase are further digested by acetogens to produce largely acetic acid, as well as carbon dioxide and hydrogen. This acidification step enhances the efficiency of the anaerobic fermentation in the biogas reactor and allows a reduction of the residence time. The acidified liquid waste material (23) exiting the acidification tank (17) is then led to the biogas reactor (9). With preference, the acidified liquid waste material (23) is first heated via an heat exchanger (89) to a temperature ranging between 35 to 40°C, with preference 38°C, before its supply to the biogas reactor (9).

### The classic anaerobic fermentation step or methanogenesis step

The anaerobic fermentation via methanogenic bacteria (or methanogens) takes place in the biogas reactor (9). The classic biogas reactor (9) preferentially contains about 1 000 to 5 000 m³. Fermentation is, with preference, conducted at a temperature ranging between 35 to 40°C, with preference 38°C. Biogas (25) produced by the fermentation is removed from the reactor (9) via an outlet (27) at the top of the reactor (9) vessel. The collecting of the biogas (25) is done according to conventional methods known from the skilled man and therefore not described any further in the present description.

According to the invention, the biogas reactor (9) is provided with agitating means (29) and recirculation pumps (not represented in the drawing) in order to have the liquid waste constantly in movement. This is to avoid the sedimentation of the dry matter and the genesis of a deposit in the bottom of the reactor (9). The constant agitation of the liquid waste also avoids the genesis of a film or a crust on the liquid surface that could disturb the collect of the produced biogas (25) and in particular of methane.

The residence time in the biogas reactor (9) will vary depending on several factors, such as the nature of the waste material (3) for example. According to the invention the average residence time in the classic biogas reactor (9) is about 15 days. With preference the average residence time is about 10 to 40 days. The reduction of the average residence time coupled to the concentration step allows a reduction of the classic biogas reactor (9) size. With respect to the invention, the biogas reactor (9) is provided with a steady flow of acidified liquid waste material (23). In order to have a continuous process, the biogas reactor (9) is supplied with a continuous flow of liquid waste material, and the same volume of liquid is removed continuously as digestate (31). The volume of the biogas reactor (9) and the rates of flow entering and going out of the reactor (9) are calculated to have the average desired residence time of the waste liquid material in the reactor (9) for proceeding with the fermentation.

### The second liquid/solid separation step

So, once the anaerobic fermentation is done, the digestate (31) contained in the classic biogas reactor (9) is pumped to be treated according to the invention. Depending on the liquid waste material (3) treated in the biogas reactor (9), the digestate (31) may contain solid elements. For example, manure may contain straw which is known to be non-fermentable in short retention times. Should the digestate (31) contain such particles of above about 3 mm, it is preferred to remove them before the second fermentation step. This can be done by a mechanical separator (35) or by filtration. The separator (35) can be a screw press or any other device that allows a continuous liquid/solid separation. The removed solid phase (37) that has been removed or filtered off can be, for example, used as compost. It is understood that this step is optional and may not be carried out for example when the waste material is dropping. A three-way valve (39) gives therefore the opportunity to provide the UASB reactor (13) directly with the digestate (31) or to direct the digestate (31) to the separator (35).

The liquid phase (41) of the digestate (31) containing the organic dry matter in suspension is directed to the UASB reactor (13) to be submitted to a second fermentation according to the invention. The liquid phase (41) of the digestate (or the digestate (31) when the removal of solid element is not necessary) entering in the UASB reactor (13) may contain a content of dry matter of about 5 to 7 % or more in the form of suspended particles. Where the digestate (31) has been submitted to mechanical liquid/solid separation the dry matter rate is dropped of about 2 %, therefore the liquid phase (41) of the digestate may contain a content of dry matter of about 3 to 5 % or more.

The liquid phase (41) of the digestate (or the digestate (31) when the removal of solid element is not necessary), is mixed to the clarified liquid (11) fraction from the first separator before entering the UASB reactor (13).

With preference, the liquid waste material (11, 31, 41, 57) comprising one or more of the clarified liquid fraction (11), the digestate (31), the liquid phase of the digestate (41) and/or the retentat (57) of ultrafiltration, is heated to a temperature ranging between 25 to 40°C, and preferably to 38°C with an heat exchanger (33) before entering the UASB reactor (13).

### The UASB fermentation step

The second reactor is an upflow anaerobic sludge blanket (UASB) reactor. UASB reactors are known to the skilled man. German patent application DE 10 2007 004 135 A1 thus relates to use the UASB process for treatment of municipal wastewater. The investment costs, the space requirement as well as the residence time in the system may be reduced thanks to this UASB process without disturbing, the biological activity of the process.
The UASB reactor (13) uses an anaerobic process via methanogenic bacteria (or methanogens) whilst forming a blanket of granular sludge (43) which suspends in the tank. The liquid waste material (11) and the liquid phase (41) of the digestate flow upwards through the blanket and is degraded by the anaerobic microorganisms. Biogas (45) produced by the fermentation is removed from the UASB reactor (13) via a biogas collector (47) at the top of the reactor (13) vessel. The collecting of the biogas (45) is done according to conventional methods known from the skilled man and therefore not described any further in the present description. The biogas (45) collected from the UASB reactor (13) is directed together with the biogas (25) collected from the classic biogas reactor (9) to a biogas holder (49).

The residence time in the UASB reactor (13) will vary depending on several factors, such as the nature of the waste material (11, 31, 41) for example. According to the invention the average residence time in the UASB reactor (13) is less than one day. With preference the average residence time is about 0,8 day. According to the volume of liquid waste material to be treated through the UASB reactor and to the average residence time, the UASB reactor (13) is preferably of 100 to 600 m³. The UASB reactor (13) is provided with a steady flow of acidified liquid waste material (11, 31, 41). In order to have a continuous process, the UASB reactor (13) is supplied with a continuous flow of liquid waste material, and the same volume of liquid is removed continuously as digestate (51). The volume of the UASB reactor (13) and the rates of flow entering and going out of the UASB reactor (13) are calculated to have the average desired residence time of the waste liquid material in the reactor (9) for proceeding with the fermentation.

Once the fermentation is done, the second digestate (51) contained in the UASB reactor (13), is pumped to be treated in a combined ultrafiltration and reverse osmosis unit. Heat recovery equipment (53) can be used on the second digestate (51) at the exit of the UASB reactor (13). The second digestate (51) shows a content of dry matter of less than 2 %.

### The ultrafiltration step

The function of the ultrafiltration step is to obtain from the UASB digestate liquid fraction a particle-free permeate. Ultrafiltration is performed in an ultrafiltration unit (55) using a tubular ultrafiltration membrane. The ultrafiltration unit (55) is equipped with several modules with plastic membranes of ultrafiltration, working in tangential ultrafiltration internal / external. The number of modules depends on the size of the treatment plant. The separation is performed at a pressure lower than 2 bars. In order to protect as much as possible the membrane during the filtering, the process according to the invention involves:
- Inversion of the direction of circulation of the retentat (57), in order to minimize the accumulation of material at the inlet of the membrane in the time.
- Regular backwashing by reversing the direction of flow through the membrane in order to decrease the clogging of membranes and so minimize the fall of the flow of the ultrafiltrate (59) in the time.

The backwashing is realized by injection of a specified quantity of ultrafiltrate (59) from the outside inward hollow fibers composing modules. In backwashing, the transmembrane pressure is periodically inverted by the use of a secondary pump, so that permeate flows back into the feed, lifting the fouling layer from the surface of the membrane. The backwashing helps to decrease the filter cake, a small layer which forms on the membrane and limits the flow of permeate (59) through the fiber.

The frequency and the duration of these backwashings are defined according to the quality of the digestate (51) to treat. For example the frequency can be every half hour for the duration of one minute.

In a preferred embodiment the product (61) generated by these backwashings can be mixed with the clarified liquid (11) and be recycled in the UASB reactor (13) to be submitted to a further cycle of methanisation. Indeed, this fraction (61) also contains bacteria and dry matter.

According to the invention, a stage of wash by acid or by sodium hydroxide (63) is planned. The acid or the sodium hydroxide (63) is used to degrade mineral or organic matters. We remind here that the digestate (51) essentially consists of organic matters. The stage of wash by acid or by sodium hydroxide takes 1 to 4 hours and is performed on one part of the modules of the ultrafiltration unit (55).

In order to have a continuous treatment of the digestate (51), the washing is not done over all the modules at the same time. Therefore, during the washing, the ultrafiltration unit is still being usable. According to the invention the ultrafiltration unit capacity is reduced to about half of its initial capacity during the washing. This allows a continuous treatment of the digestate (51), 24 hours over 24. The washing step can be performed every day. However, according to the invention it is performed less than one time a day. Indeed, the low rate of dry matter entering the unit of ultrafiltration added to the regular inversion of the retentat and the backwashing of the membrane allows limiting down time of the ultrafiltration module in order to be washed.

The ultrafiltrate (59) is then sent towards a unit of reverse osmosis (67) having undergone a modification of the pH by addition of acid (83) in a tank (65). After modification the pH must be lower than 8.

### The reverse osmosis

The reverse osmosis step is performed in a reverse osmosis unit (67) by a conventional spiral reverse osmosis membrane unit. The reverse osmosis can be either performed as a batch process or a continuous process. In a preferred embodiment the reverse osmosis is performed as a continuous process. It consists in two passes.

In the first pass (67a) of reverse osmosis, the ultrafiltrate is divided in two parts:
- The permeat (69) that crosses the membrane and is cleared of the major part of its ions before being managed towards the second pass (67b).
- The retentat (71) which does not cross the membrane and contains all the reserved compounds, is evacuated to be valued because rich in mineral salts and ammonium. The retentat (71) is treated by vacuum evaporation (73) using the heat recovery of the system in order to get solid fertilizer (75).

In the second pass (67b), the principle is identical to the first one, but the quality of the obtained permeat (77) is compatible with a discharge in the natural environment. The retentat (79) can be recycled at the top of the first pass (67a).

According to the invention, a stage of wash of the membranes by water or by acid or by sodium hydroxide is regularly planned. This stage is managed in order to allow a continuous process. With preference the stage of wash of the reverse osmosis unit (67) is synchronized with the stage of wash of the ultrafiltration unit (55) by sodium hydroxide or by acid.

The water (77) extracted from the module of reverse osmosis has a pH included between 5,2 and 7. The pH varies according to the quality of the digestat (51). The water (77) is little mineralized water, thus it will be needed very few products for a rectification of pH if necessary. The temperature of the water is between 35 and 40 °C. A heat recovery equipment (81) can be used on the water before it is released.

An important advantage of the treatment plant described above is that it allows a reduction of the processing time in dividing the liquid waste material in two fractions, i.e. a clarified liquid fraction that allows a treatment via a UASB reactor and a concentrated liquid fraction treated in a classic biogas reactor. The first digestate from the classic biogas reactor is further treated in the UASB reactor to minimize its dry matter content and increase the biogas production by a second fermentation. The second digestate from the fermentation of the clarified liquid fraction and the second fermentation of the first digestate from the concentrated liquid fraction show a low dry matter content that does not need any sedimentation or precipitation stage before treatment by ultrafiltration and allows the process to be continuous.

## Claims

1. Method of treatment of an organic waste material in a liquid form comprising:
- subjecting the liquid waste material (3) to a first solid/liquid separation step (7) resulting in a clarified fraction (11) and a concentrated fraction (15);
- subjecting said concentrated fraction (15) to anaerobic fermentation in a biogas reactor (9) resulting in a first digestate (31);
- subjecting said first digestate (31) and said clarified fraction (11) to an anaerobic fermentation in a UASB reactor (13) resulting in a second digestate (51); and
- subjecting said second digestate (51) to ultrafiltration and reverse osmosis.

2. Method according to claim 1 **characterized in that** the first solid/liquid separation step (7) is configured so the clarified fraction (11) contains a content of dry matter lower than 3%, and with preference, lower than 2 %.

3. Method according to claim 1 or 2 **characterized in that** the first solid/liquid separation step (7) is configured so the clarified fraction (11) represents more than 70% in volume of the organic waste liquid material (3) to be treated, with preference more than 90 %.

4. Method according to claim 1 to 3 **characterized in that** the first solid/liquid separation step (7) is configured so the concentrated fraction (15) contains a content of dry matter in a range of 10 to 40 %, with preference 20 to 30 %.

5. Method according to claim 1 to 4 **characterized in that** the concentrated fraction (15) is diluted with addition of liquid waste material (3) to contain a content of dry matter lower than 12 % before being subjected to anaerobic fermentation in the biogas reactor (9).

6. Method according to claim 1 to 5 **characterized in that** hydrolysis, acidogenosis and acetogenosis are performed on the concentrated fraction (15) through an acidification step (17) before being subjected to anaerobic fermentation in the biogas reactor (9).

7. Method according to claim 1 to 6 **characterized in that** the average residence time in the biogas reactor (9) is about 15 to 25 days, with preference about 20 days.

8. Method according to claim 1 to 7 **characterized in that** the first digestate (31) is subjected to a second liquid/solid separation (35) before entering the anaerobic fermentation step in the UASB reactor (13), with preference said second liquid/solid separation (35) removes solid particles above 3 mm.

9. Method according to claim 1 to 8 **characterized in that** the average residence time in the UASB reactor (13) is about 0,5 to 2 days, with preference about 0,8 day.

10. Method according to claim 1 to 9 **characterized in that** the second digestate (51) is subjected to an ultrafiltration (55) step resulting in a retentat (57) and an ultrafiltrate (59) and **in that** the retentat (57) of ultrafiltration is returned to the UASB reactor (13), with preference the ultrafiltration step (55) includes backwashing by reversing the direction of the ultrafiltrate (59) flow, and **in that** the products (61) generated by the backwashing are returned to the UASB reactor (13).

11. Plant for the treatment of an organic waste material in liquid form, according to any one of claims 1-10, said plant comprising a biogas reactor (9), an ultrafiltration unit (55) and a reverse osmosis unit (67) **characterized in that** the plant further comprises a UASB reactor (13), a first liquid/solid separator (7) to treat the organic waste material (3) before the biogas reactor (9) and means to direct the clarified fraction (11) to the UASB reactor (13) and the concentrated fraction (15) to the biogas reactor (9).

12. Plant according to claim 11 **characterized in that** it further comprises means to direct the first digestate (31) from the biogas reactor (9) to the UASB reactor (13).

13. Plant according to claim 11 to 12 **characterized in that** it further comprises means for achieving a second solid/liquid separation (35) of the first digestate (31) before the UASB reactor (13), with preference such means allow particles over 3 mm being removed.

14. Plant according to any of claims 11 to 13 **characterized in that** it further comprises means to redirect the retentat (57) from the ultrafiltration unit (55) and/or the product (61) of the backwashing of the ultrafiltration unit (55) to the UASB reactor (13).

15. Plant according to any of claims 11 to 14 **characterized in that** it further comprises an acidifaction tank (17) to perform hydrolysis of the concentrated fraction (15) before it is directed to the biogas reactor (9).

## Patentansprüche

1. Verfahren zur Behandlung eines organischen Abfallmaterials in flüssiger Form, das die folgenden Schritte umfasst:
- das flüssige Abfallmaterial (3) wird einer ersten Fest/-Flüssig-Trennung (7) unterzogen, die zu einer geklärten Fraktion (11) und einer konzentrierten Fraktion (15) führt;
- diese konzentrierte Fraktion (15) wird in einem Biogasreaktor einer anaeroben Fermentation unterzogen (9), was zu einem ersten Gärrest (31) führt;
- dieser erste Gärrest (31) sowie die genannte geklärte Fraktion (11) werden einer anaeroben Fermentation in einem UASB-Reaktor (13) unterzogen, was zu einem zweiten Gärrest (51) führt; schließlich
- wird der zweite Gärrest (51) einer Ultrafiltration und einer Umkehrosmose unterzogen.

2. Das Verfahren laut Anspruch 1 ist **dadurch gekennzeichnet, dass** die ersten Fest-/Flüssig-Trennung (7) so konfiguriert ist, dass die geklärte Fraktion (11) einen Trockensubstanzgehalt von weniger als 3 % und vorzugsweise von weniger als 2 % aufweist.

3. Das Verfahren laut Anspruch 1 oder 2 ist **dadurch gekennzeichnet, dass** die erste Fest-/Flüssig-Trennung (7) so konfiguriert ist, dass das Volumen der geklärten Fraktion (11) über 70 % und vorzugsweise über 90 % des zu behandelnden organischen flüssigen Abfallmaterials (3) ausmacht.

4. Das Verfahren laut Ansprüchen 1 bis 3 ist **dadurch gekennzeichnet, dass** die erste Fest-/Flüssig-Trennung (7) so konfiguriert ist, dass die konzentrierte Fraktion (15) einen Trockensubstanzgehalt zwischen 10 und 40 % und vorzugsweise zwischen 20 bis 30 % aufweist.

5. Das Verfahren laut Ansprüchen 1 bis 4 ist **dadurch gekennzeichnet, dass** die konzentrierte Fraktion (15) unter Zusatz von flüssigem Abfallmaterial (3) verdünnt wird, um einen Trockensubstanzgehalt von weniger als 12 % zu enthalten, bevor sie einer anaeroben Fermentation im Biogasreaktor unterzogen wird (9).

6. Das Verfahren laut Ansprüchen 1 bis 5 ist **dadurch gekennzeichnet, dass** an der konzentrierten Fraktion (15) Hydrolyse, Acidogenese und Acetogenese durch einen Ansäuerungsschritt (17) durchgeführt werden, bevor diese einer anaeroben Fermentation im Biogasreaktor (9) unterzogen wird.

7. Das Verfahren laut Ansprüchen 1 bis 6 ist **dadurch gekennzeichnet, dass** die durchschnittliche Verweilzeit im Biogasreaktor (9) etwa 15 bis 25 Tage und vorzugsweise etwa 20 Tage beträgt.

8. Das Verfahren laut Ansprüchen 1 bis 7 ist **dadurch gekennzeichnet, dass** der erste Gärrest (31) vor Eintritt in den anaeroben Fermentationsschritt im UASB-Reaktor (13) einer zweiten Flüssig-/Fest-Trennung (35) unterzogen wird, wobei diese zweite Flüssigkeit-/Feststoffabscheidung (35) vorzugsweise Feststoffpartikel entfernt, die größer als 3 mm sind.

9. Das Verfahren laut Ansprüchen 1 bis 8 ist **dadurch gekennzeichnet, dass** die durchschnittliche Verweilzeit im UASB-Reaktor (13) etwa 0,5 bis 2 Tage und vorzugsweise etwa 0,8 Tage beträgt.

10. Das Verfahren laut Ansprüchen 1 bis 9 ist **dadurch gekennzeichnet, dass** der zweite Gärrest (51) einem Ultrafiltrationsschritt (55) unterzogen wird, der zu einem Retentat (57) und einem Ultrafiltrat (59) führt, und dass das Retentat der Ultrafiltration (57) in den UASB-Reaktor (13) zurückgeführt wird, wobei der Ultrafiltrationsschritt (55) vorzugsweise das Rückspülen durch Umkehren der Richtung des Ultrafiltratstroms (59) umfasst, indem die durch das Rückspülen erzeugten Produkte (61) in den UASB-Reaktor zurückgeführt werden (13).

11. Anlage zur Behandlung eines organischen Abfallmaterials in flüssiger Form nach jeglichem der Ansprüche 1 bis 10, wobei die Anlage mit einem Biogasreaktor (9), einer Ultrafiltrationsanlage (55) und einer Umkehrosmoseanlage (67) ausgestattet ist sowie weiterhin einen UASB-Reaktor (13), einen ersten Flüssig-/Fest-Abscheider (7) zur Behandlung des organischen Abfallmaterials (3) vor dem Eintritt in den Biogasreaktor (9) sowie weitere Mittel umfasst, mit denen die geklärte Fraktion (11) zum UASB-Reaktor (13) und die konzentrierte Fraktion (15) zum Biogasreaktor (9) geleitet werden können.

12. Die Anlage laut Anspruch 11 ist **dadurch gekennzeichnet, dass** sie ferner Mittel umfasst, um den ersten Gärrest (31) vom Biogasreaktor (9) zum UASB-Reaktor (13) zu leiten.

13. Die Anlage laut Ansprüchen 11 und 12 ist **dadurch gekennzeichnet ist, dass** sie ferner Mittel zum Erreichen einer zweiten Fest-/-Flüssig-Trennung (35) des ersten Gärrests (31) vor dem Eintritt in den UASB-Reaktor (13) umfasst, wobei solche Mittel bevorzugt Partikel entfernt, die größer als 3 mm sind.

14. Die Anlage nach jeglichem der Ansprüche 11 bis 13 ist **dadurch gekennzeichnet, dass** sie ferner Mittel zum Umleiten des Retentats (57) von der Ultrafiltrationseinheit (55) und/oder des Produkts (61) der Rückspülung der Ultrafiltrationseinheit (55) zum UASB-Reaktor (13) umfasst.

15. Die Anlage nach jeglichem der Ansprüche 11 bis 14 ist **dadurch gekennzeichnet, dass** sie ferner einen Ansäuerungstank (17) umfasst, um die Hydrolyse der konzentrierten Fraktion (15) durchzuführen, bevor diese zum Biogasreaktor (9) geleitet wird.

## Revendications

1. Méthode de traitement d'un déchet organique sous forme liquide comprenant:
- soumettre le déchet liquide (3) à une première étape de séparation solide / liquide (7) aboutissant à une fraction clarifiée (11) et une fraction concentrée (15);
- soumettre ladite fraction concentrée (15) à une fermentation anaérobie dans un réacteur de biogaz (9) aboutissant à un premier digestat (31);
- soumettre ledit premier digestat (31) et ladite fraction clarifiée (11) à une fermentation anaérobie dans un réacteur UASB (13) aboutissant à un second digestat (51); et
- soumettre ledit second digestat (51) à une ultrafiltration et à une osmose inverse.

2. Méthode selon la revendication 1 **caractérisée en ce que** la première étape de séparation solide / liquide (7) est configurée pour que la fraction clarifiée (11) contienne une teneur en matière sèche inférieure à 3%, et de préférence inférieure à 2%.

3. Méthode selon la revendication 1 ou 2 **caractérisée en ce que** la première étape de séparation solide / liquide (7) est configurée de sorte que la fraction clarifiée (11) représente plus de 70% en volume de déchet organique liquide (3) à traiter, de préférence plus de 90%.

4. Méthode selon la revendication 1 à 3 **caractérisée en ce que** la première étape de séparation solide / liquide (7) est configurée pour que la fraction concentrée (15) contienne une teneur en matière sèche comprise entre 10 et 40%, de préférence 20 à 30%.

5. Méthode selon la revendication 1 à 4 **caractérisée en ce que** la fraction concentrée (15) est diluée avec addition de déchets liquides (3) pour contenir une teneur en matière sèche inférieure à 12% avant d'être soumise à une fermentation anaérobie dans le réacteur de biogaz (9).

6. Méthode selon la revendication 1 à 5 **caractérisée en ce que** l'hydrolyse, l'acidogénose et l'acétogénose sont effectuées sur la fraction concentrée (15) par une étape d'acidification (17) avant d'être soumise à une fermentation anaérobie dans le réacteur de biogaz (9).

7. Méthode selon la revendication 1 à 6 **caractérisée en ce que** le temps de séjour moyen dans le réacteur à biogaz (9) est d'environ 15 à 25 jours, de préférence d'environ 20 jours.

8. Méthode selon la revendication 1 à 7 **caractérisée en ce que** le premier digestat (31) est soumis à une deuxième séparation liquide / solide (35) avant d'entrer dans l'étape de fermentation anaérobie dans le réacteur UASB (13), de préférence ladite deuxième séparation liquide / solide (35) élimine les particules solides supérieures à 3 mm.

9. Méthode selon la revendication 1 à 8 **caractérisée en ce que** le temps de séjour moyen dans le réacteur UASB (13) est d'environ 0,5 à 2 jours, de préférence d'environ 0,8 jour.

10. Méthode selon la revendication 1 à 9 **caractérisée en ce que** le deuxième digestat (51) est soumis à une étape d'ultrafiltration (55) conduisant à un rétentat (57) et un ultrafiltrat (59) et **en ce que** le rétentat (57) d'ultrafiltration est renvoyé au réacteur UASB (13), de préférence l'étape d'ultrafiltration (55) inclut un contre-lavage en inversant la direction de l'écoulement de l'ultrafiltrat (59), et **en ce que** les produits (61) générés par le contre-lavage sont renvoyés au réacteur UASB (13).

11. Installation de traitement d'un déchet organique sous forme liquide, selon l'une quelconque des revendications 1 à 10, ladite installation comprenant un réacteur de biogaz (9), une unité d'ultrafiltration (55) et une unité d'osmose inverse (67) **caractérisée en ce que** l'installation comprend en outre un réacteur UASB (13), un premier séparateur liquide / solide (7) pour traiter les déchets organiques (3) avant le réacteur de biogaz (9) et des moyens pour diriger la fraction clarifiée (11) vers le réacteur UASB (13) et la fraction concentrée (15) vers le réacteur de biogaz (9).

12. Installation selon la revendication 11 **caractérisée en ce qu'**elle comprend en outre des moyens pour diriger le premier digestat (31) du réacteur de biogaz (9) vers le réacteur UASB (13).

13. Installation selon la revendication 11 à 12 **caractérisée en ce qu'**elle comprend en outre des moyens pour réaliser une deuxième séparation solide / liquide (35) du premier digestat (31) avant le réacteur UASB (13), de préférence de tels moyens permettent à des particules de plus de 3 mm d'être enlevées.

14. Installation selon l'une quelconque des revendications 11 à 13 **caractérisée en ce qu'**elle comprend en outre des moyens pour rediriger le rétentat (57) de l'unité d'ultrafiltration (55) et / ou le produit (61) du contre-lavage de l'unité d'ultrafiltration (55) au réacteur UASB (13).

15. Installation selon l'une quelconque des revendications 11 à 14 **caractérisée en ce qu'**elle comprend en outre une cuve d'acidification (17) pour effectuer l'hydrolyse de la fraction concentrée (15) avant qu'elle ne soit dirigée vers le réacteur de biogaz (9).
